Europäisches Patentamt

European Patent Office

Office européen des brevets

(11) Veröffentlichungsnummer: **0 233 557 B1**

# (12) EUROPÄISCHE PATENTSCHRIFT

(45) Veröffentlichungstag der Patentschrift: **03.06.92**

(21) Anmeldenummer: **87101611.9**

(22) Anmeldetag: **06.02.87**

(51) Int. Cl.⁵: **C12H 1/00**

---

(54) **Mittel und Verfahren für den biologischen Säureabbau in Wein und Most.**

---

(30) Priorität: **20.02.86 DE 3605427**

(43) Veröffentlichungstag der Anmeldung:
**26.08.87 Patentblatt 87/35**

(45) Bekanntmachung des Hinweises auf die Patenterteilung:
**03.06.92 Patentblatt 92/23**

(84) Benannte Vertragsstaaten:
**AT BE CH DE ES FR GB GR IT LI LU**

(56) Entgegenhaltungen:
**EP-A- 0 141 878**
**CH-A- 392 429**
**DE-B- 1 231 196**
**FR-A- 2 323 758**
**US-A- 4 380 552**

(73) Patentinhaber: **BOEHRINGER INGELHEIM KG**
**Postfach 200**
**W-6507 Ingelheim am Rhein(DE)**

(84) Benannte Vertragsstaaten:
**AT BE CH DE ES FR GB GR IT LI LU**

(73) Patentinhaber: **BOEHRINGER INGELHEIM IN-TERNATIONAL GmbH**
**Postfach 20**
**W-6507 Ingelheim am Rhein(DE)**

(84) Benannte Vertragsstaaten:
**GB**

(72) Erfinder: **Volz, Astrid**
**Stiegelgasse 40**
**W-6507 Ingelheim am Rhein(DE)**

EP 0 233 557 B1

## Beschreibung

Die Erfindung betrifft den "biologischen Säureabbau" in Wein oder Most, d.h. die bakterielle Umsetzung von Äpfelsäure zu Milchsäure und $CO_2$.

Unter bestimmten Bedingungen kann nach der Gärung der "natürliche Säureabbau" einsetzen, der auf der Einwirkung im Wein vorhandener Milchsäurebakterien beruht. Dieser Säureabbau muß aber nicht eintreten. Deshalb ist es häufig erwünscht, den Säureabbau durch Zusatz von Starterkulturen zu Most oder Jungwein gezielt in Gang zu setzen. Bei diesen Starterkulturen handelt es sich um getrocknete, gefriergetrocknete oder tiefgefrorene Bakterienkulturen.

Für den erfolgreichen Einsatz der Bakterien ist es notwendig, die Bakterien vor der Zugabe zum Most oder Wein zu rehydratisieren und zu reaktivieren. Dies geschieht in einer flüssigen Vorkultur.

Nach dem Stand der Technik werden die Bakterien in Most oder einem mosthaltigen Medium bei bestimmter Temperatur (20-25°C) und einem bestimmten pH-Wert (4,0-4,5) reaktiviert. Most hat normalerweise einen pH-Wert von 3,0-3,5. Dieser pH-Wert liegt für eine optimale Reaktivierung zu tief. Deshalb muß das pH des Mostes durch Zusatz basischer Stoffe (Kalk, Laugen) auf den gewünschten Wert von 4,0-4,5 angehoben werden, bevor die Bakterien zugesetzt werden. Da der Winzer im allgemeinen nicht über geeignete Meßgeräte verfügt, verursacht die Einstellung des richtigen pH-Wertes oft beträchtliche Schwierigkeiten.

Es wurde nun gefunden, daß die Herstellung der Starterkultur für den biologischen Säureabbau in Most oder Wein vorteilhaft mit einem Mittel erfolgen kann, das durch Mischen von Bakterienfeuchtmasse geeigneter äpfelsäureabbauender Bakterien mit geeigneten basischen Stoffen und anschließende Trocknung nach üblichen Methoden, z.B. Vakuumtrocknung oder Gefriertrocknung erhalten wird.

Die Erfindung löst somit die Aufgabe, ein Mittel anzugeben, mit dem auf einfache Weise, ohne vorherige Einstellung des pH-Wertes in dem benötigten Medium, eine Starterkultur für den biologischen Säureabbau erhalten werden kann, und ferner, wie das Mittel herzustellen ist.

Es hat sich gezeigt, daß der Zusatz des Entsäuerungsmittels das Trocknen der Bakterienmasse erleichtert und daß das erhaltene Präparat sich besonders gut in dem Reaktivierungsmedium suspendieren läßt.

Als basische Stoffe können z.B. Calciumcarbonat, insbesondere in Form von Spezialkalken für die Weinentsäuerung (etwa Acidex ®), neutrales Kaliumtartrat oder Kaliumhydrogencarbonat verwendet werden.

Als Bakterien eignen sich alle diejenigen Bakterien, die für den biologischen Säureabbau brauchbar sind, insbesondere Leuconostoc-Arten, beispielsweise Leuconostoc oenos, und Lactobacillus-Arten, beispielsweise Lactobacillus plantarum. Solche Bakterien sind im Handel erhältlich oder können aus Most oder Jungwein isoliert werden.

Die benötigte Bakterienmasse wird erhalten, indem man die geeigneten Bakterien in üblicher Weise im Fermenter vermehrt, vom Nährmedium abtrennt und mit physiologischer Kaliumchloridlösung wäscht. Die Bakterienmasse wird zweckmäßig durch Zentrifugieren von einem Teil der Feuchtigkeit befreit, wobei ein Produkt mit ca. 20 bis 35, vorzugsweise mit ca. 30 % Bakterienmasse (der Rest ist Feuchtigkeit) erhalten wird.

Die Bakterienmasse wird mit der geeigneten Menge eines basischen Stoffs (Entsäuerungsmittel) vermischt und einer Trocknung nach üblichen Methoden unterworfen, zweckmäßig einer Trocknung bei Raumtemperatur im Vakuum oder einer Gefriertrocknung.

Es hat sich gezeigt, daß sich bei üblichen Mosten und Weinen, die ein pH von etwa 3,0 bis 3.6 aufweisen, bei Zusatz von ca. 4 bis 7 g $CaCO_3$ (bzw. entsprechender Mengen anderer Entsäuerungsmittel) pro Liter das geeignete pH von 4,0 bis 4,5 einstellt. Bevorzugt benutzt man 5 bis 6 g Calciumcarbonat pro Liter. Das Verhältnis: trockene Bakterienmasse zu Calciumcarbonat liegt im allgemeinen zwischen 1 : 5 und 2 : 3, vorzugsweise bei etwa 1 : 2 bis 1,2 : 2.

Die Mischung wird in einer solchen Menge dem Starterkultur-Medium (Most, Jungwein) zugesetzt, wie sie den oben angegebenen Mengen an Entsäuerungsmittel entsprechen. Bevorzugt ist demnach ein Zusatz von 5 - 6 g Calciumcarbonat (oder entsprechender Mengen anderer Entsäuerungsmittel) und etwa 2,5 bis 3,6 g trockener Bakterienmasse pro Liter. Nach einer Reaktivierungszeit von ca. 2 Tagen (bei Raumtemperatur) kann die Starterkultur zur Entsäuerung eingesetzt werden. Die Starterkultur wird in üblicher Weise zur Entsäuerung verwendet. Im allgemeinen werden pro 1000 Liter Most bzw. Jungwein 0,5 bis 2 Liter der erfindungsgemäß herstellbaren Starterkultur zugegeben.

### Beispiel

Aus 10 Liter Fermentationsbrühe von Lactobacillus plantarum werden durch Abzentrifugieren, Waschen mit physiologischer Kaliumchloridlösung und erneutes Zentrifugieren 50 g Bakterienmasse mit ca. 70 % Gesamtfeuchtigkeitsgehalt gewonnen. Diese Masse wird mit 27,5 g ACIDEX®-Entsäuerungskalk vermischt und im Vakuum bei 24°C 12 Stunden getrocknet. Es werden 43 g getrocknete Mischung erhalten.

Zur Reaktivierung der Bakterien wird das Präparat in 5 Liter Most mit einem pH von 3,2 eingerührt. Nach vollständiger Suspension beträgt der pH-Wert 4,2. Bei Raumtemperatur beträgt die Reaktivierungsdauer 2 Tage. Mit der erhaltenen Starterkultur wird Wein beimpft, in dem ein biologischer Säureabbau stattfinden soll. Dazu wird 1 Liter der Starterkultur pro 1000 Liter Wein angewendet.

**Patentansprüche**

1. Mischungen aus Bakterien, die Äpfelsäure zu Milchsäure und $CO_2$ abbauen, und basischen Stoffen, wie sie zur Entsäuerung von Weinen und Mosten üblich sind.

2. Mischungen nach Anspruch 1, dadurch gekennzeichnet, daß als Bakterien Leuconostoc- oder Lactobacillus-Arten verwendet werden.

3. Mischungen nach Anspruch 1 oder 2, dadurch gekennzeichnet, daß als basische Stoffe feinteiliges Calciumcarbonat, neutrales Kaliumtartrat oder Kaliumhydrogentartrat verwendet werden.

4. Mischungen nach Anspruch 1, 2 oder 3, dadurch gekennzeichnet, daß man als Bakterien die Arten Leuconostoc oenos oder Lactobacillus plantarum verwendet.

5. Mischung nach einem der Ansprüche 1 bis 4, dadurch gekennzeichnet, daß das Verhältnis trockene Bakterienmasse zu Calciumcarbonat etwa 1 : 5 bis 2 : 3, vorzugsweise etwa 1 : 2 bis 1,2 : 2 beträgt.

6. Verfahren zur Herstellung von Mitteln nach Anspruch 1, 2, 3 oder 4, dadurch gekennzeichnet, daß man durch Fermentation in an sich bekannter Weise Bakterien, die Äpfelsäure zu Milchsäure und $CO_2$ abbauen, vermehrt, die aus der Fermentationsbrühe erhältliche feuchte Bakterienmasse mit einer geeigneten Menge eines an sich bekannten Mittels zur Erhöhung des pH-Wertes von Most oder Wein vermischt und die Mischung einer üblichen Trocknung, vorzugsweise einer Vakuumtrocknung bei Raumtemperatur oder einer Gefriertrocknung unterwirft.

7. Verfahren zum Abbau von Äpfelsäure in Wein und Most, dadurch gekennzeichnet, daß man aus Most und einer Mischung nach Anspruch 1, 2, 3 oder 4 eine Starterkultur herstellt und den zu entsäuernden Wein oder Most mit der Starterkultur in üblicher Weise beimpft.

**Claims**

1. Mixtures of bacteria which break down malic acid into lactic acid and $CO_2$, and basic substances, such as are conventionally used for deacidifying wines and musts.

2. Mixtures according to claim 1, characterised in that varieties of Leuconostoc or Lactobacillus are used as the bacteria.

3. Mixtures according to claim 1 or 2, characterised in that finely divided calcium carbonate, neutral potassium tartrate or potassium hydrogen tartrate are used as basic substances.

4. Mixtures according to claims 1, 2 or 3, characterised in that the bacteria used are the varieties Leuconostoc oenos or Lactobacillus plantarum.

5. Mixture according to one of claims 1 to 4, characterised in that the ratio of dry bacterial mass to calcium carbonate is about 1 : 5 to 2 : 3, preferably about 1 : 2 to 1.2 : 2.

6. Process for preparing agents according to claim 1, 2, 3 or 4, characterised in that bacteria which break down malic acid into lactic acid and $CO_2$ are replicated by fermentation in a manner known per se, the moist bacterial mass obtained from the fermentation liquor is mixed with a suitable quantity of a known agent for raising the pH of must or wine, and the mixture is subjected to conventional drying, preferably vacuum drying at ambient temperature or freeze-drying.

7. Process for breaking down malic acid in wine and must, characterised in that a starter culture is prepared from must and a mixture according to claim 1, 2, 3 or 4 and the wine or must which is to be deacidified is inoculated with the starter culture in the usual way.

**Revendications**

1. Mélanges de bactéries, qui dégradent l'acide malique en acide acide lactique et en $CO_2$, et de substances basiques telles que celles qui sont courantes pour la désacidification des vins et des moûts.

2. Mélanges selon la revendication 1, caractérisés en ce que l'on utilise comme bactéries les genres Leuconostoc ou Lactobacillus.

3. Mélanges selon la revendication 1 ou 2, caractérisés en ce que l'on utilise comme substances basiques du carbonate de calcium finement divisé, du tartrate de potassium neutre ou de l'hydrogénotartrate de potassium.

4. Mélanges selon la revendication 1, 2 ou 3, caractérisés en ce que l'on utilise comme bactéries les genres Leuconostoc oenos ou Lactobacillus plantarum.

5. Mélange selon l'une des revendications 1 à 4, caractérisé en ce que le rapport entre la masse bactérienne sèche et le carbonate de calcium est d'environ 1:5 à 2:3, de préférence d'environ 1:2 à 1,2:2.

6. Procédé de préparation d'agents selon la revendication 1, 2, 3 ou 4, caractérisé en ce que l'on multiplie par fermentation de manière connue en soi des bactéries qui dégradent l'acide malique en acide lactique et en $CO_2$, on mélange la masse bactérienne humide qui peut être obtenue à partir du bouillon de fermentation avec une quantité appropriée d'un agent connu en soi pour augmenter le pH du moût ou du vin et on soumet le mélange à un séchage habituel, de préférence à un séchage sous vide à la température ambiante ou à une lyophilisation.

7. Procédé de dégradation de l'acide malique dans le vin ou le moût, caractérisé en ce que l'on prépare une culture d'amorçage à partir de moût et d'un mélange selon la revendication 1, 2, 3 ou 4 et l'on inocule de la manière habituelle le vin ou le moût à désacidifier avec la culture d'amorçage.